## Europäisches Patentamt

## European Patent Office

## Office européen des brevets

(11) Veröffentlichungsnummer: **0 081 093**
**B1**

(12) **EUROPÄISCHE PATENTSCHRIFT**

(45) Veröffentlichungstag der Patentschrift:
**20.03.85**

(21) Anmeldenummer: **82110397.5**

(22) Anmeldetag: **11.11.82**

(51) Int. Cl.⁴: **B 29 C 47/12**

(30) Priorität: **05.12.81 DE 3148212**

(43) Veröffentlichungstag der Anmeldung:
**15.06.83 Patentblatt 83/24**

(45) Bekanntmachung des Hinweises auf die Patenterteilung:
**20.03.85 Patentblatt 85/12**

(84) Benannte Vertragsstaaten:
**AT BE CH DE FR GB IT LI NL SE**

(56) Entgegenhaltungen:
**DD - A - 32 273**
**DE - A - 2 617 123**
**FR - A - 1 370 052**
**FR - A - 1 391 805**
**US - A - 3 932 090**

(54) Strangpresse.

(73) Patentinhaber: **Continental Gummi-Werke
Aktiengesellschaft, Königsworther Platz 1,
D-3000 Hannover 1 (DE)**

(72) Erfinder: **Hermann, Dietmar, Chem.-Ing. grad.,
Kantstrasse 7, D-3008 Garbsen (DE)**
Erfinder: **Brodmann, Richard, Sadebuschstrasse 15,
D-3000 Hannover 21 (DE)**
Erfinder: **Fischer, Rolf, Marschnerstrasse 14,
D-3000 Hannover 1 (DE)**

## Beschreibung

Die Erfindung bezieht sich auf Strangpressen zum Herstellen von Profilsträngen aus elastomerem Werkstoff, mit einer formgebenden Strangpressdüse, die mit einer Teilabschnitte ihres freien Austrittsquerschnittes teilweise überdeckenden Absperrvorrichtung in Form einer quer zu der Austrittsrichtung der Profilstränge beweglichen Blende versehen ist.

Profilstränge aus Gummi oder gummiähnlichen elastischen Kunststoffen, wie sie beispielsweise zum dichtenden Einfassen von Fensterscheiben in Kraftfahrzeugen und Gebäuden, Lukendeckeln und ähnlichen Bau- oder Verschlusselementen Verwendung finden, werden in der Regel mit über ihre gesamte Einbaulänge gleichbleibender Querschnittsform benötigt, so dass sie mit Vorteil mittels Strangpressen hergestellt werden können. Als ein in dieser Hinsicht erschwerender Umstand wirkt sich aber die verschiedentlich erhobene Forderung nach einem abschnittsweise begrenzten Anformen besonderer Dichtlippen oder anderer Profilvorsprünge oder auch umgekehrt nach dem auf bestimmte Längenbereiche beschränkten örtlichen Einschnüren der ursprünglichen Profilform aus. Es müssen in diesen Fällen in zusätzlichen, den Herstellungsvorgang überlagernden oder ergänzenden Verfahrensschritten den vorgeformten Profilsträngen über Teilstrecken die vorgesehenen Querschnittserweiterungen zugefügt oder überschüssige Randstreifen auf mechanischem Wege abgenommen werden. Beides ist im Rahmen der Gesamtfertigung unwirtschaftlich und praktisch ohne Unterbrechung oder zumindest Störung des kontinuierlich ablaufenden Strangpressvorganges nicht durchzuführen.

Nach einem bekannten Vorschlag (DE-OS Nr. 2617123) ist die Umfangskontur der Strangpressdüse mit Hilfe einer quer zu der Austrittsrichtung der Profilstränge beweglichen Blende veränderlich, so dass es damit möglich wird, den Querschnitt der ausgepressten Profilstränge über ihre Länge hin zu verändern. Eine solche, als Absperrvorrichtung wirkende Blende kann im Verlauf des üblichen Strangpressvorganges nach Belieben so eingestellt werden, dass sie vorübergehend Teile des freien Düsenquerschnittes überdeckt und gegen das Austreten des elastomeren Werkstoffes absperrt, so dass in der Folge ein um diesen Querschnittsbereich eingezogener Profilstrang erzeugt wird. Der Übergang zwischen den aufeinander folgenden Strangabschnitten ist dabei fliessend. Die Stellung der Blende kann je nach Bedarf von Hand oder aber auch statt dessen selbsttätig beispielsweise nach einem vorgegebenen Programm, durch Abtasten mittels Endschaltern auf fotoelektrischem Wege oder mit anderen kontaktgebenden oder berührungsfreien Mitteln geregelt werden. Als auf die Blende selbst einwirkende Antriebsmittel sind sowohl Druckmittelstellzylinder als auch Elektromotoren und andere Maschinen geeignet. Der Erfindung liegt die Verbesserung von Strangpressen der eingangs geschilderten Art und ihre Anpassung an die Bedürfnisse der Praxis als Aufgabe zugrunde.

Nach der Erfindung ist die Blende in einer Strangpresse der eingangs genannten Art in ihren den Düsenquerschnitt überdeckenden Bereichen mit zu dem Presswerkzeug offenen, Teilströme des elastomeren Werkstoffes aufnehmenden und aus der Richtung des austretenden Profilstranges ablenkenden Ausgleichskanälen ausgebildet. Die Erfindung trägt damit der Erscheinung Rechnung, dass jede Änderung des freien Durchgangsquerschnittes der Strangpressdüse Änderungen in dem Druckzustand des der Düse unmittelbar zuströmenden Pressgutes und damit wiederum unkontrollierbare Massänderungen des austretenden Profilstranges nach sich zieht. Mit der erfindungsgemässen Ausbildung der Blende wird einem nachteiligen örtlichen Anstauen des Massestromes vorgebeugt und ein im wesentlichen gleichbleibender Pressdruck als Voraussetzung für ein innerhalb der vorgegebenen Toleranzen massgenaues Erzeugnis aufrechterhalten.

Die Erfindung ist anhand der schematischen Darstellung zweier Ausführungsbeispiele in der Zeichnung verdeutlicht In der Zeichnung ist:
Fig. 1 das Mundstück einer Strangpressdüse in Voderansicht gegen die Pressrichtung gesehen mit einer geradlining hin- und herbeweglichen Blende,
Fig. 2 ein Mundstück in gleicher Darstellung wie Fig. 1 aber mit schwenkbar zugeordneter Blende, und
Fig. 3 eine Einzelheit aus Fig. 1 und 2 in vergrössertem Massstab.

Das in der Darstellung mit 4 bezeichnete Mundstück bildet das austrittsseitige Endglied der Pressdüse einer Strangpresse üblicher Bauart, beispielsweise einer Scheckenpresse. Das Mundstück ist mit einer Durchbrechung 5 versehen, die dem austretenden plastischen Profilstrang seine Querschnittsform aufzwingt. In der gezeichneten Ausführung dient das Mundstück 4 zum Herstellen von Randeinfassleisten für Kraftfahrzeugfenster, wobei als Besonderheit eine von der Ausnehmung 15 abgeformte Dichtlippe an den fertigen Einfassleisten nur in begrenzten Längenabschnitten vorhanden sein soll. Zu diesem Zweck ist eine die Ausnehmung 15 vorübergehend überdeckende Absperrvorrichtung vor dem Mundstück 4 vorgesehen.

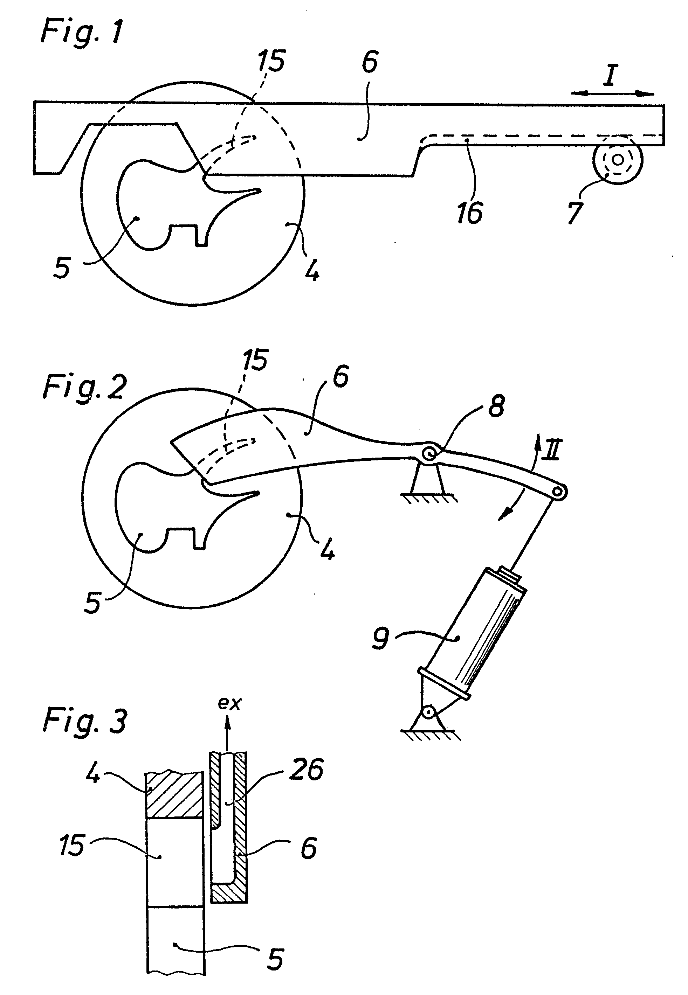

In dem in Fig. 1 gezeichneten Ausführungsbeispiel ist die Absperrvorrichtung als eine in unmittelbarer Zuordnung zu dem Mundstück 4 in Richtung des Doppelpfeiles I hin- und herbeweglichen Blende 6 ausgebildet. Die Blende ist in nicht weiter dargestellten Geradführungen gelagert und kann durch ein in eine Verzahnung 16 eingreifendes Ritzel 7 so verschoben werden, dass sie wahlweise gemäss der gezeichneten Darstellung die Ausnehmung 15 abdichtend überdeckt oder in einer anderen Stellung die gesamte Durchbrechung 5 für den Durchtritt der plastischen Pressmasse freigibt. Die in Fig. 2 gezeichnete Ausführungsform unterscheidet sich hiervon nur darin, dass die Blende als zweiarmiger Hebel an einem feststehenden Drehzapfen 8 schwenkbar gelagert ist und mittels eines Druckmittelarbeitszylinders 9 auf einer Kreisbahn im Sinne des Doppelpfeiles II zwischen ihren beiden Endstellungen verschwenkt werden kann. Die Wirkung ist in beiden Fällen die gleiche.

Unabhängig von ihrer besonderen Bewegungsform und Antriebsart ist die Blende 6 in ihrem die Ausnehmung 15 überdeckenden Bereich gemäss der Querschnittsdarstellung in Fig. 3 mit einem nach der Strangpresse hin offenen und in Richtung des Pfeiles ex nach aussen führenden Ausgleichskanal 26 ausgebildet. Der Ausgleichskanal 26 nimmt in der Überdeckungsstellung der Blende zumindest einen wesentlichen Teil der sonst aus der Ausnehmung 15 austretenden plastischen Pressmasse auf und leitet sie zur Wiederverwendung ab, so dass es zu keinen grösseren örtlichen Druckstauungen im Einzugsbereich des Mundstückes 4 mit daraus folgenden unkontrollierten Formänderungen des ausgepressten Profilstranges kommen kann.

Die Erfindung schliesst auch den Aufbau der Absperrvorrichtung aus mehr als einer der beschriebenen Blenden und ebenso die Ausbildung der Blenden mit mehr als einer steuernden Kante zum wahlweisen Überdecken eines oder mehrerer Teilbereiche der Mundstückdurchbrechungen mit ein.

## Patentansprüche

1. Stangpresse zum Herstellen von Profilsträngen aus elastomerem Werkstoff, mit einer formgebenden Strangpressdüse, die mit einer Teilabschnitte ihres freien Austrittsquerschnittes zeitweise überdeckenden Absperrvorrichtung in Form einer quer zu der Austrittsrichtung der Profilstränge beweglichen Blende versehen ist, dadurch gekennzeichnet, dass die Blende (6) in ihren den Düsenquerschnitt (5) überdeckenden Bereichen mit zu dem Presswerkzeug offenen, Teilströme des elastomeren Werkstoffes aufnehmenden und aus der Richtung des austretenden Profilstranges ablenkenden Ausgleichskanälen (26) ausgebildet ist.

2. Strangpresse nach Anspruch 1, dadurch gekennzeichnet, dass die Blende (6) geradlinig beweglich vor der Strangpressdüse (4) angeordnet ist.

3. Strangpresse nach Anspruch 1, dadurch gekennzeichnet, dass die Blende (6) auf einer Kreisbahn verschwenkbar vor der Strangpressdüse (4) angeordnet ist.

## Claims

1. Extrusion press for producing extruded profiles from elastomeric material, having a shaping extrusion press nozzle which is provided with a blocking device which temporarily covers partial sections of the free discharge aperture of the nozzle and is in the form of a screen which is movable transversely to the discharge direction of the extruded profiles, characterised in that the screen (6), in its regions covering the nozzle aperture (5), is provided with compensating channels (26) which are open in the direction of the pressing tool, accommodate partial streams of the elastomeric material and deflect same away from the direction of the emergent extruded profile.

2. Extrusion press according to Claim 1, characterised in that the screen (6) is disposed in front of the extrusion press nozzle (4) so as to be movable in a straight line.

3. Extrusion press according to Claim 1, characterised in that the screen (6) is disposed in front of the extrusion press nozzle (4) so as to pivotable about a circular path.

## Revendications

1. Extrudeuse pour la fabrication de profilés en matière élastomère, comprenant une filière d'extrusion donnant la forme, munie d'un dispositif d'arrêt qui recouvre temporairement des segments partiels de sa section de sortie libre, réalisé sous la forme d'un diaphragme pouvant se déplacer transversalement à la direction de sortie des profilés, caractérisée en ce que le diaphragme (6) est réalisé, dans ses régions qui recouvrent la section (5) de la filière, avec des canaux de compensation (26) qui s'ouvrent vers l'outil d'extrusion et qui reçoivent des courants partiels de la matière élastomère et les dévient de la direction du profilé sortant.

2. Extrudeuse selon la revendication 1, caractérisée en ce que le diaphragme (6) est disposé de manière à pouvoir se déplacer en ligne droite devant la filière d'extrusion (4).

3. Extrudeuse selon la revendication 1, caractérisée en ce que le diaphragme (6) est monté devant la filière d'extrusion (4) pour osciller sur une trajectoire circulaire.

Fig. 1

*15*  *6*  *I*

*5*  *4*  *16*  *7*

Fig. 2

*15*  *6*  *8*

*II*

*4*

*5*  *9*

Fig. 3

*ex*

*4*  *26*

*15*  *6*

*5*